# EUROPÄISCHE PATENTANMELDUNG

(11) **EP 2 354 328 A2**
(43) Veröffentlichungstag der Anmeldung: **10.08.2011**
(21) Anmeldenummer: 11153530.8
(22) Anmeldetag: 07.02.2011
(51) Int. Cl.: E02F 3/40, E02F 3/413, E02F 3/36, A01B 59/06, B62D 49/06

(54) **Anbaulasche für die Aufnahme eines Schnellwechslers eines Arbeitsgerätes**

(30) Priorität: 09.02.2010 DE 202010000155 U
(71) Anmelder: Verotool Technik GmbH, 40880 Ratingen (DE)
(72) Erfinder: Rosenbrock, Karl Hermann, 40880, Ratingen (DE)
(74) Vertreter: Fitzner, Uwe

(57) **Zusammenfassung**

Die Anmeldung betrifft eine Anbaulasche (1) für die Aufnahme eines Schnellwechslers (12) zum Auswechseln von Arbeitsgeräten (14,18) von maschinellen Vorrichtungen in Form einer länglich ausgestalteten Längslasche, welche an einem Ende (2) hakenförmig zur Aufnahme einer ersten Welle des Schnellwechslers (12) ausgestaltet ist, an dem anderen gegenüberliegenden Ende (3) eine Ausnehmung (4) zur Aufnahme eines Sperrriegels aufweist und in dem dem hakenförmigen Ende abgewandten Bereich (8) der die beiden Enden (2,3) verbindenden Längskante (5) eine Ausnehmung (6) zur Aufnahme einer zweiten Welle (13) des Schnellwechslers (12) aufweist, wobei die Dicke (7) der Längslasche im Bereich (8) der Ausnehmungen (4,6) für die Aufnahme der Welle (13) und des Sperrriegels im Vergleich zu den übrigen Bereichen (9) der Anbaulasche erhöht ist.

## Beschreibung

Die vorliegende Erfindung betrifft eine Anbaulasche für die Aufnahme eines Schnellwechslers zum Auswechseln von Arbeitsgeräten von maschinellen Vorrichtungen.

Für das Arbeiten mit Baumaschinen ist es essenziell, dass diese vielseitig einsetzbar sind. So ist es bei Baggern, Radlagern, Schleppern und Teleskopmaschinen von wesentlicher Bedeutung, dass Ausrüstungsteile auswechselbar sind. Für das Arbeiten mit Baumaschinen kommt es daher darauf an, dass der Werkzeugwechsel mit möglichst wenig Zeitaufwand verbunden ist. Will man beispielsweise einen Bagger auf der Baustelle mit der jeweils zur gewünschten Arbeit passenden Ausrüstung versehen (Schaufeln, Löffel, Aufreißer, Bohrhammer usw.), muss dies mit geringst möglichem Aufwand möglich sein.

Für diese Zwecke wurden sog. Schnellwechseleinrichtungen entwickelt, mit denen sich die Umrüstkosten auf ein Minimum senken können. Solche Vorrichtungen sind Gegenstand vielfältiger Beschreibungen und von Schutzrechtsanmeldungen.

Aus der DE 10 2006 023 429 A1 ist beispielsweise eine solche Schnellwechseleinrichtung bekannt. Ein weiteres Beispiel ist aus der EP 0 483 232 B1 bekannt, welche aus einem eine Schwenk- und Verriegelungseinrichtung umfassenden Schnellwechsel und einem Adapter besteht.

Aus der WO 2005/093 172 A1 ist ebenfalls eine Schnellwechselvorrichtung bekannt, die eine Schwenkbewegung zum Kuppeln von Schnellwechslern und Adapter sowie zwei Kupplungsblöcken ausführt.

Problematisch bei allen bekannten Ausführungen ist, dass beim Ein- und Ausbau sowie bei den verschiedenen Einsatzarten sehr hohe Kräfte auftreten. Es hat sich herausgestellt, dass bei sehr hohen Kräften das Material ermüdet oder es zu einem Fließen des Werkstoffes und damit zu einem Verklemmen der Teile kommen kann. Insbesondere im Adapterbereich sind Brüche des Materials möglich.

Die vorliegende Erfindung hat sich nunmehr die Aufgabe gestellt, eine Anbaulasche zur Verfügung zu stellen, welche sich durch besonders große Stabilität auszeichnet. Zugleich ist es Aufgabe der Erfindung, dass eine Optimierung des Gewichts bei höchstmöglicher Stabilität erreicht wird.

Diese Aufgabe wird durch eine Anbaulasche für die Aufnahme eines Schnellwechslers zum Auswechseln von Arbeitsgeräten von maschinellen Vorrichtungen in Form einer länglich ausgebildeten Längsachse gelöst, welche an einem Ende hakenförmig zur Aufnahme einer ersten Welle des Schnellwechselers ausgestaltet ist und am anderen gegenüberliegenden Ende eine Ausnehmung zur Aufnahme eines Sperrriegels aufweist, und in dem dem hakenförmigen Ende abgewandten Bereich der die beiden Enden verbindenden Längskante der Anbaulasche eine Ausnehmung zur Aufnahme einer zweiten Welle des Schnellwechslers aufweist, wobei die Dicke der Längslasche im Bereich der Ausnehmungen für die Aufnahme der weiteren Welle und des Sperrriegels im Vergleich zu den übrigen Bereichen der Anbaulasche erhöht ist.

Die Einbaulasche ist in ihrem hakenförmigen Ende derart ausgestaltet, dass dort eine erste Welle eines Schnellwechslers aufgenommen werden kann. An dem anderen gegenüberliegenden Ende der Anbaulasche ist ebenfalls eine Aussparung vorgesehen, welche zur Aufnahme eines Sperrriegels dient.

Die Anbaulasche weist ferner zwei Längskanten auf, welche die beiden Enden verbinden. Eine der Längskanten weist in dem dem hakenförmigen Ende abgewandten Bereich in unmittelbarer Nähe zur Aussparung für den Sperrriegel eine weitere Ausnehmung auf. Diese dient der Aufnahme einer zweiten Welle des Schnellwechslers.

In dem Bereich mit den Ausnehmungen für Sperrriegel und zweite Welle des Schnellwechslers ist die Anbaulasche gegen Schäden, insbesondere Brüche, besonders gefährdet. Hier ist demgemäß eine Stabilisierung, insbesondere Verstärkung des Materials vorgesehen. Dieser Bereich nimmt 14 - 16 % oder je nach Ausführungsform 8 - 10 % des Gesamtfläche ein. Demgemäß macht dieser Bereich ca. 15 bzw. ca. 9 % der Gesamtfläche aus.

Das Verhältnis der Dicke der Anbaulasche in diesem Bereich zu den übrigen Bereichen der Anbaulasche liegt bei 5:1 bis 2:1, bevorzugt 2,5:1 bis 2:1. Bevorzugt liegen die Dicken des verstärkten Bereiches zwischen 45 und 100 mm, bevorzugt 50 und 100 mm. Die anderen Bereiche der Längslasche haben in Abhängigkeit von der Ausführungsform eine Dicke von 20 - 60 mm.

Die Erhöhung der Dicke und damit Verstärkung kann auf verschiedene Art erreicht werden. Im einfachsten Falle kann auf die aus Stahlblech bestehende Anbaulasche noch zusätzliches Stahlblech aufgeschweißt werden. Bevorzugt ist jedoch eine Verstärkung der Dicke, ohne dass zusätzliche Schweißnähte entstehen.

Erfindungsgemäß wird demgemäß vorzugsweise gehärtetes Stahlblech mit Härten von 250 - 450 HB. Erfindungsgemäß besonders bevorzugt ist es, durch Verwendung von vergütetem, legiertem Stahlguss in den Bereichen zu verstärken, in denen insbesondere die Gefahr von Brüchen an der Anbaulasche mit nachfolgenden teuren Reparaturen und Arbeitsausfall der betroffenen Geräte verbunden ist. Besonders bevorzugt ist es erfindungsgemäß, für die Anbaulasche in dem kritischen Bereich partiell verstärkten Stahlguss einzusetzen.

Zusätzlich zu der Verstärkung kann an den Aussparungen noch eine Kappe aufgeschweißt werden. Hierdurch entsteht ein Synergieeffekt zwischen verstärkten Bereichen und zusätzlichem Aufbringen einer angeschweißten Kappe.

Die erfindungsgemäße Anbaulasche hat den erheblichen Vorteil einer Gewichtsersparnis durch die nur partielle Verstärkung. Es ist nicht erforderlich, die gesamte Anbaulasche zu verstärken, was eine erhebliche Gewichtszunahme mit sich brächte. Solche hohen Gewichte können entweder zu höheren Kippkräften - beispielsweise in den Baggern führen - oder zumindest zu einem größeren Energiebedarf. Ferner haben hohe Gewichte den Nachteil eines höheren Verschleißes am Trägergerät. Ebenso verlangsamen sich u.U. die Arbeitsschritte bzw. -tempo. Diese Auswirkungen werden durch die erfindungsgemäße Optimierung von Verstärkung und möglichst wenig Gewichtszunahme der Anbaulasche vermieden.

Im Folgenden wird die Erfindung unter Bezugnahme auf die Figuren näher beschrieben.
Figur 1 stellt die erfindungsgemäße Anbaulasche in zwei Ansichten dar. Aus Figur 1 a ist die Dicke der Lasche ersichtlich. Figur 1 b zeigt die seitliche Ansicht.
In Figur 2 ist ein Beispiel eines üblichen Schnellwechslers dargestellt, wie er für die erfindungsgemäße Anbaulasche verwendet werden kann.
Figur 3 zeigt die Einbausituation für ein Greifgerät.
Figur 4 zeigt die Ausführungsform der Anbaulasche, wie sie in Figur 3 verwendet wird.
In den Figuren 5 und 6 ist die Verwendung der erfindungsgemäßen Anbaulasche für einen Löffel in zwei verschiedenen Ansichten dargestellt.

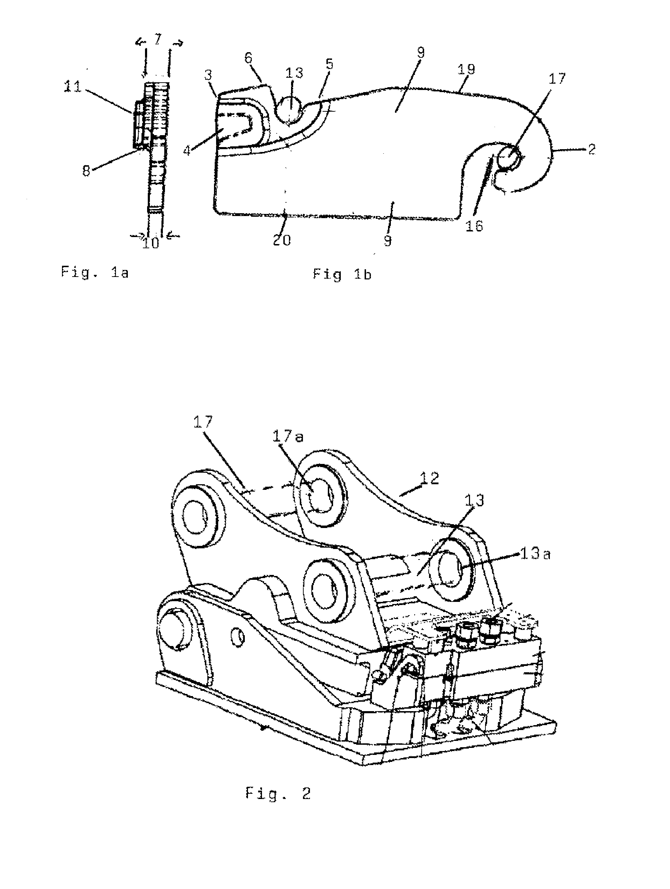

Die erfindungsgemäß Anbaulasche 1 gemäß der Figur 1 weist zwei unterschiedliche gestaltete Enden 2 und 3 auf. Das Ende 2 ist in Form eines Hakens ausgestaltet. In dem Zwischenraum 16 lässt sich damit eine erste Welle 17 eines Schnellwechslers 12 einsetzen. Das Ende 3 weist einen verstärkten Bereich 8 aus vergütetem legiertem Stahlguss auf. In diesem Bereich befindet sich eine Aussparung 4 für die Aufnahme eines Sperrriegels. Im Bereich 5 der Längskante 19 ist eine Aussparung 6 vorgesehen, in welche sich eine zweite Welle 13 des Schnellwechslers 12 einsetzen lässt.

In Figur 1a sind die verschiedenen Dicken der Anbaulasche 1 zu erkennen. Im Bereich 10 ist die minimale Dicke dargestellt. Der Bereich 7 zeigt den verstärkten Bereich 8. Auf den verstärkten Bereich 8 ist noch ein Deckel 11 in einem Stück gegossen aufgesetzt, welcher für eine zusätzliche Verstärkung sorgt.

In Figur 2 ist ein Beispiel eines Schnellwechslers 12 dargestellt, wie er aus der DE 10 2006 023 420 A1 bekannt ist. In die Aussparungen 13 a und 17 a lassen sich die Wellen 17 und 13 einsetzen. Diese Wellen sind wiederum in der Einbausituation am Arbeitsgerät mit der Anbaulasche 1 verbunden. Bei Einsatz der erfindungsgemäßen Anbaulasche werden die Wellen 17 und 13 des Schnellwechslers in die Aussparungen 16 und 6 eingefügt. Sobald die Wellen eingesetzt sind, wird eine Fixierung mittels eines in die Aussparung 4 eingesetzten Sperrriegels (nicht dargestellt) vorgenommen.

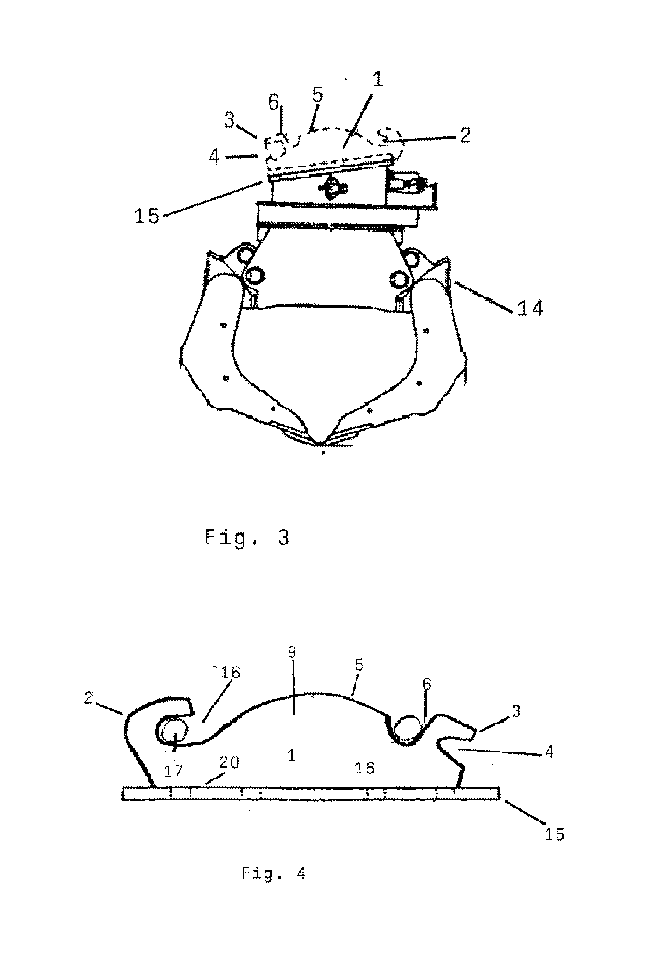

In einer Variante der Erfindung gemäß Figur 3 kann der erfindungsgemäße Schnellwechsler auf einen Greifer aufgesetzt werden. Hierfür ist die erfindungsgemäße Einbaulasche mit ihrer Längskante 20 auf eine Bodenplatte 15 aufgebracht. Diese ist ihrerseits fest mit dem Greifer verbunden. Über das hakenförmige Ende 2 und die Aussparung 6 erfolgt die Verbindung mit den Wellen 17 und 13 eines Schnellwechslers, welcher permanent am Arbeitsgerät befestigt ist. Über die Aussparung 4 erfolgt die Fixierung mittels eines Sperrriegels (nicht dargestellt).

In Figur 4 ist in einem Ausschnitt nur der erfindungsgemäß in Figur 3 eingesetzte Schnellwechsler dargestellt. Hier ist die Bodenplatte 15, welche sich an der Unterkante 20 der Anbaulasche befindet, zu erkennen. Dargestellt sind auch die Wellen 17 und 16 in der Einbausituation.

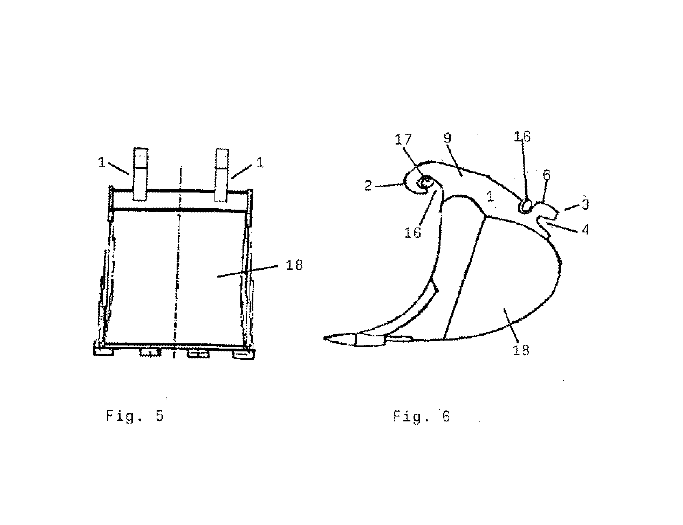

In den Figuren 5 und 6 ist eine weitere Variante der erfindungsgemäßen Anbaulasche dargestellt. Hierbei ist die Anbaulasche fest mit einem Löffel 18 verbunden. Für den Einbau wird diese Anbaulasche erfindungsgemäß wiederum mit ihrem hakenförmigen Ende über die Aussparung 16 mit einer Welle 17 verbunden. Die Welle 16 wird in die Aussparung 6 eingeführt. Nach dem Einbau erfolgt eine Verriegelung mittels eines Sperrriegels in der Aussparung 4.

In Figur 5 ist ersichtlich, dass erfindungsgemäß regelmäßig zwei Einbaulaschen 1 verwendet werden. Hierdurch wird die nötige Stabilität, insbesondere gegen Torsionsbewegungen, erreicht.

## Patentansprüche

1. Anbaulasche (1) für die Aufnahme eines Schnellwechslers (12) zum Auswechseln von Arbeitsgeräten (14, 18) von maschinellen Vorrichtungen in Form einer länglich ausgestalteten Längslasche, welche an einem Ende (2) hakenförmig zur Aufnahme einer ersten Welle des Schnellwechslers (12) ausgestaltet ist, an dem anderen gegenüberliegenden Ende (3) eine Ausnehmung (4) zur Aufnahme eines Sperrriegels aufweist und in dem dem hakenförmigen Ende abgewandten Bereich (8) der die beiden Enden(2, 3) verbindenden Längskante (5) eine Ausnehmung (6) zur Aufnahme einer zweiten Welle (13) des Schnellwechslers (12) aufweist, wobei die Dicke (7) der Längslasche im Bereich (8) der Ausnehmungen (4, 6) für die Aufnahme der Welle (13) und des Sperrriegels im Vergleich zu den übrigen Bereichen (9) der Anbaulasche erhöht ist.

2. Anbaulasche nach Anspruch 1 **dadurch gekennzeichnet, dass** die Verhältnisse der Dickenbereiche (7, 9) zwischen 5:1 und 2:1 liegt.

3. Anbaulasche nach Anspruch 2 **dadurch gekennzeichnet, dass** die Dickenverhältnisse bei 2,5:1 bis 2:1 liegen.

4. Anbaulasche nach einem der vorhergehenden Ansprüche **dadurch gekennzeichnet, dass** die größte Dicke zwischen 45 bis 100 mm liegt.

5. Anbaulasche nach Anspruch 4 **dadurch gekennzeichnet, dass** die größte Dicke zwischen 50 bis 100 mm liegt.

6. Anbaulasche nach einem der vorhergehenden Ansprüche **dadurch gekennzeichnet, dass** der Bereich (8) eine Fläche von 14 - 16 % der Gesamtfläche der Anbaulasche (1) beträgt.

7. Anbaulasche nach Anspruch 6 **dadurch gekennzeichnet, dass** der nicht verstärkte Bereich (8) eine Fläche von 8 - 10 % der Gesamtfläche beträgt.

8. Anbaulasche nach einem der vorhergehenden Ansprüche **dadurch gekennzeichnet, dass** sie aus vergütetem, legiertem Stahlguss besteht.
